# FASCICULE DE BREVET EUROPEEN

(11) **EP 0 498 745 B1**
(45) Date de publication et mention de la délivrance du brevet: **12.04.1995**
(21) Numéro de dépôt: 92440001.3
(22) Date de dépôt: 16.01.1992
(51) Int. Cl.: B60K 15/05

(54) **Trappe d'obturation de l'accès au bouchon de réservoir de carburant d'un véhicule automobile**
Abdeckkappe eines Treibstoffbehälters für ein Kraftfahrzeug
Fuel tank inlet cover for an automotive vehicle

(30) Priorité: 04.02.1991 FR 9101353
(43) Date de publication de la demande: 12.08.1992
(73) Titulaire: OMEGAL (Société Anonyme), 67540 Ostwald (FR)
(72) Inventeur: Guy, Christophe, F-67400 Illkirch Graffenstaden (FR)
(74) Mandataire: Aubertin, François

(56) Documents cités:
- EP-A- 0 124 410
- DE-A- 2 852 855
- DE-A- 3 301 072

## Description

L'invention concerne une trappe d'obturation de l'accès au bouchon de réservoir de carburant d'un véhicule automobile, comportant un portillon relié, d'une part, au travers de moyens d'articulation et, d'autre part, par l'intermédiaire de moyens élastiques susceptibles de maintenir ledit portillon, soit en position de fermeture de la trappe, soit en position d'ouverture de cette dernière, à une embase solidaire de la carrosserie dudit véhicule automobile.

De plus en plus fréquemment, sur les véhicules automobiles, la tubulure de remplissage du réservoir de carburant débouche dans une cuvette emboutie dans la carrosserie dudit véhicule automobile, cette extrémité débouchante de ladite tubulure de remplissage recevant, par ailleurs, un bouchon éventuellement verrouillable.

Par ailleurs, et pour des raisons, à la fois d'esthétique et de protection, la cuvette dans laquelle se situe, finalement, ce bouchon de remplissage du réservoir du carburant est refermée à l'aide d'une trappe d'obturation consistant en un portillon coopérant, au travers de moyens d'articulation appropriés, avec une embase fixée à l'intérieur de ladite cuvette.

En réalité et en dehors de ces moyens d'articulation, il est employé, très fréquemment, des moyens élastiques afin de relier le portillon à ladite embase et par conséquent à la carrosserie dudit véhicule automobile, de tels moyens élastiques maintenant ce portillon en position refermée tant qu'il n'y a pas d'intervention volontaire de la part de l'usager ou, au contraire, bloquant ce portillon en position ouverte, plus particulièrement, pendant l'approvisionnement du véhicule en carburant.

En effet, il convient d'observer que dans le cadre de portillon de forme arrondie, l'axe de rotation de ce dernier, sur la carrosserie du véhicule automobile, est nécessairement déporté par rapport à son extrémité arrière. Aussi et lors de la rotation de ce portillon, cette extrémité arrière vient à plonger dans ladite carrosserie et, plus particulièrement, à l'intérieur de la cuvette recevant le bouchon de réservoir. Or, si cette extrémité arrière se situe à une distance quelque peu importante de cet axe de rotation du portillon, ce qui est généralement le cas pour les portillons ronds, la profondeur de la cuvette est insuffisante pour autoriser une ouverture complète de la trappe d'obturation.

En quelque sorte et de manière à remédier aux inconvénients précités, il y a lieu, précisément, lors de cette rotation du portillon correspondant à la trappe d'obturation de décaler son axe de rotation.

Ceci fut notamment envisagé dans le cadre du document EP-A-0.124.410 qui décrit un mécanisme de trappe à essence pour véhicule automobile, ce mécanisme comprenant un portillon destiné à masquer, en position fermée, une portion emboutie dans la carrosserie pour recevoir un bouchon de réservoir. Ce portillon est articulé sur cette carrosserie au moyen d'un dispositif d'articulation à deux positions privilégiées correspondant aux positions fermées et ouvertes.

En fait, ce dispositif d'articulation comprend un coulisseau dont une extrémité est montée articulée sur ledit portillon. Ce coulisseau se déplace, par ailleurs, à l'intérieur d'un fourreau de guidage s'insérant, au travers d'une ouverture réalisée dans la portion emboutie, à l'intérieur de la carrosserie du véhicule. Ce fourreau est fixé dans cette portion emboutie au moyen d'une bride de fixation.

A noter, en outre, que dans le fourreau sont disposés des moyens de rappel élastique maintenus sous contrainte et tentant, de manière systématique, à ramener le coulisseau à l'intérieur de ce fourreau.

Finalement, ce dispositif d'articulation comprend deux paires de cames dont l'une est présente au niveau du portillon et vient à coopérer avec l'autre paire se situant à l'extrémité du coulisseau. Plus précisément, cette coopération des deux paires de cames, permet de garantir, lors de l'ouverture du portillon, une projection, vers l'extérieur et perpendiculairement au plan de la carrosserie, de l'axe de rotation de ce portillon. Cette projection assure, finalement, le dégagement de ladite extrémité arrière de ce dernier de ladite carrosserie, ceci de manière à ne pas empêcher cette rotation ou à n'autoriser qu'une ouverture partielle dudit portillon.

Bien que cette trappe d'obturation particulière, connue au travers du document EP-A-0.124.410, permet de satisfaire aux conditions exposées plus haut pour l'ouverture d'un portillon de forme ronde et, plus généralement, quelconque, il n'en reste pas moins qu'elle emploie un dispositif d'articulation fort complexe, faisant intervenir un nombre important de pièces nécessitant un temps de montage important sans compter qu'elles conduisent à un coût de fabrication élevé de cette trappe d'obturation. De plus, ce dispositif d'articulation présente, également, l'inconvénient d'être particulièrement encombrant. En effet, tel que déjà indiqué, le fourreau employé nécessite l'aménagement d'une ouverture dans la cuvette recevant le bouchon de réservoir, ouverture qui est, par ailleurs, gênante d'un point de vue des risques de corrosion auxquels elle conduit puisque c'est, généralement, au niveau des angles vifs de telles ouvertures qu'il y a amorçage de la rouille.

Il convient, également, de prendre en considération le fait, que la présence du fourreau empêche, généralement, le centrage de la bride dans le fond de la cuvette emboutie dans la carrosserie.

La présente invention se propose de remédier à l'ensemble des inconvénients précités et reconnus aux trappes d'obturation correspondant à l'état antérieur de la technique, notamment représenté par ce document EP-A-0.124.410.

L'invention telle qu'elle caractérisée dans les revendications, résout le problème et consiste en une trappe d'obturation de l'accès au bouchon de réservoir de carburant d'un véhicule automobile, comprenant un portillon relié, d'une part, au travers de moyens d'articulation et, d'autre part, par l'intermédiaire de moyens élastiques susceptibles de maintenir ledit portillon, soit en position de fermeture de la trappe, soit en position d'ouverture de cette dernière, à une embase solidaire de la carrosserie dudit véhicule automobile, lesdits moyens élastiques étant formés par une lame élastique présentant la configuration d'un "U" dont l'une des ailes parallèles est rendue solidaire de la face interne du portillon et dont l'autre aile parallèle présente une extrémité active coopérant avec des moyens d'action munissant ladite embase, et lesdits moyens d'articulation comportant des moyens pour décaler, à la fois dans le plan de la carrosserie du véhicule automobile et suivant une direction perpendiculaire à cette dernière et de manière à s'en écarter, l'axe de rotation du portillon lors de l'ouverture de ce dernier, ces moyens étant constitués par la combinaison desdits moyens élastiques agissant sur les moyens d'action de ladite embase et par la coopération d'une paire de cames associées au portillon et d'une paire de rampes d'appui solidaires de cette embase.

Les avantages obtenus grâce à cette invention consistent, essentiellement, en ce que l'on est en présence, au total, de trois pièces dont l'une s'identifie comme le portillon, l'autre l'embase et la troisième la lame élastique. En somme, on rejoint une simplicité de conception conduisant, non seulement à un coût de revient amoindri de la trappe d'obturation mais, surtout, à une fiabilité de fonctionnement accrue de cette dernière.

On notera, par ailleurs, que les moyens d'articulation spécifiques à l'invention, bien qu'autorisant l'utilisation du portillon de forme indifférente, n'en présente pas moins un encombrement réduit ne nécessitant pas impérativement l'aménagement d'une ouverture quelconque dans la cuvette recevant le bouchon de réservoir, tel que ceci fut le cas pour certaines trappes d'obturation de l'état antérieur de la technique.

L'invention est décrite, ci-après, plus en détail à l'aide de dessins ne correspondant qu'à un exemple de réalisation.
- la figure 1 représente une vue partielle, schématisée et en coupe d'une trappe d'obturation conforme à l'invention, le portillon étant refermé sur la cuvette aménagée dans la carrosserie d'un véhicule automobile ;
- la figure 2 représente une vue analogue à la figure 1, le portillon étant, cependant, en position ouverte ;
- la figure 3 représente une vue schématisée partielle et en plan du portillon de la trappe d'obturation ;
- la figure 4 représente une vue schématisée et en perspective de ce portillon ;
- la figure 5 représente une vue schématisée et en perspective de l'embase venant à être fixée dans le fond de la cuvette aménagée dans la carrosserie du véhicule, étant plus particulièrement visible la face inférieure de cette embase ;
- la figure 6 représente une vue analogue à la figure 5, l'embase ayant, cependant, été retournée de manière à ce que l'on puisse apercevoir sa face supérieure orientée en direction du portillon ;
- la figure 7 représente une vue en élévation de cette embase ;
- la figure 8 représente une vue schématisée et en perspective des moyens élastiques ;
- la figure 9 représente une vue schématisée et en élévation de ces moyens élastiques ;
- la figure 10 représente de manière schématisée et en perspective la trappe d'obturation, conforme à l'invention, le portillon, illustré ici de manière partielle, ayant été amené en position d'ouverture, ceci par rapport à l'embase ;
- la figure 11 représente une vue analogue à la figure 10, le portillon ayant, cependant, été ramené dans une position de fermeture.

Tel que représenté sur ces dessins joints en annexe, la présente invention est relative à une trappe 1 d'obturation de l'accès au bouchon de réservoir de carburant (non représenté) d'un véhicule automobile.

Plus particulièrement, il convient de rappeler que ce bouchon de réservoir vient à être appliqué sur l'extrémité d'une tubulure de remplissage en carburant, l'extrémité de cette tubulure venant à déboucher au niveau d'une cuvette 2 emboutie dans ladite carrosserie 3 du véhicule automobile.

De manière à protéger l'accès à ce bouchon de réservoir et, par ailleurs, en vue d'améliorer l'esthétique de cette carrosserie 3 du véhicule automobile, ladite cuvette 2 dans laquelle débouche cette tubulure de remplissage est refermée au moyen de la trappe d'obturation 1.

En fait, cette dernière comporte un portillon 4 monté, grâce à des moyens d'articulation 5 ainsi que par l'intermédiaire de moyens élastiques 6, sur une embase 7 venant à être disposée à l'intérieur de la cuvette 2 et, donc, fixée à la carrosserie 3 du véhicule automobile.

De manière à faciliter la compréhension de la présente invention ainsi que son fonctionnement, il sera procédé, ci-dessous, à une description successive des trois pièces composant, en réalité, la trappe d'obturation 1, à savoir, le portillon 4, l'embase 7 et les moyens élastiques 6, sachant que les moyens d'articulation 5 sont en partie intégrés audit portillon 4 et à ladite embase 7.

Plus en avant de cette description, l'on précisera les intéractions existant entre chacune de ces pièces 4, 6 et 7.

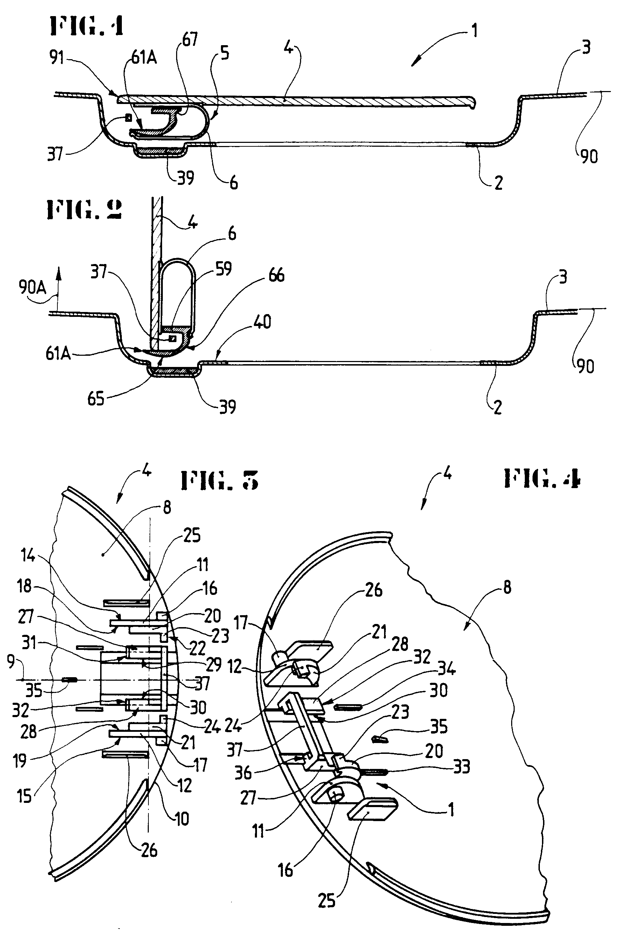

Plus particulièrement et en ce qui concerne le portillon 4, tel qu'illustré dans les figures 1 à 4, 10 et 11, celui-ci comporte, au niveau de sa face interne 8, selon une disposition symétrique par rapport à un plan médian horizontal 9 et à proximité de son bord périphérique 10, deux cames 11, 12 se présentant sous forme d'ailes disposées perpendiculairement au plan dudit portillon 4, le profil de came étant déterminé par le chant 13 de ces ailes.

Ces cames 11, 12 interviennent, plus particulièrement, dans le cadre de l'articulation du portillon 4 sur l'embase 7.

Par ailleurs, lesdites cames 11, 12 sont munies, d'une part, sur la face supérieure 14, respectivement sur la face inférieure 15, d'un tourillon 16, 17, intervenant, notamment, en tant que moyens de retenue de ce portillon 4 sur l'embase 7 lorsque la trappe est en position ouverte.

D'autre part, lesdites cames 11, 12 comportent, au niveau de la face inférieure 18, respectivement, la face supérieure 19, c'est-à-dire orientée en direction du plan médian horizontal 9, une oreille 20, 21 intervenant dans le guidage du portillon 4 lors de sa rotation sur l'embase 7.

Ces oreilles 20, 21 sont munies, en outre, et au niveau de leur partie arrière 22, de languettes 23, 24, ayant, en raison de leur coopération avec ladite embase 7, une fonction de retenue du portillon 4 à l'égard d'actions qui lui seraient imprimées verticalement lorsqu'il est en position de fermeture ou en position d'ouverture.

De plus ledit portillon 4 est pourvu, en outre, sur sa face interne 8 et au-delà des cames 11, 12 de rebords 25, 26 parallèles au plan médian horizontal 9 ayant pour fonction de guider et de positionner ce portillon 4 par rapport à la cuvette 2 lorsqu'on vient à refermer la trappe 1, ce positionnement étant obtenu au travers d'une coopération de ces rebords 25, 26 avec ladite embase 7.

Par ailleurs, entre les cames 11, 12 et toujours selon une disposition symétrique par rapport au plan médian horizontal 9, le portillon 4 reçoit, sur sa face interne 8, deux glissières horizontales 27, 28 comportant, chacune, une rainure horizontale 29, 30 servant de logement à une partie des moyens élastiques 6. Ces rainures horizontales 29, 30 viennent à déboucher, au niveau du chant vertical avant 31, 32 desdites glissières horizontales 27, 28.

A l'avant de ces dernières, peuvent, en outre, être implantés des rebords de guidage 33, 34, d'une part, favorisant l'insertion de la partie concernée des moyens élastiques 6 à l'intérieur desdites glissières 28, 29 et, d'autre part, tout comme ces dernières, maintenant latéralement, ces moyens élastiques 6.

Il est également prévu au niveau de cette face interne 8 du portillon 4 des moyens anti-recul 35 destinés à empêcher que les moyens élastiques 6 viennent à se dégager des glissières 27, 28 sans qu'il n'y ait une intervention volontaire de la part de l'usager.

Finalement, les glissières 27, 28 sont surmontées, dans leur partie arrière 36, d'un butoir 37 disposé perpendiculairement au plan médian horizontal 9 et constituant, tout comme les tourillons 16, 17, des moyens de retenue du portillon 4 sur l'embase 7, plus particulièrement, lorsque la trappe est amenée en position ouverte lors de l'approvisionnement du véhicule automobile en carburant.

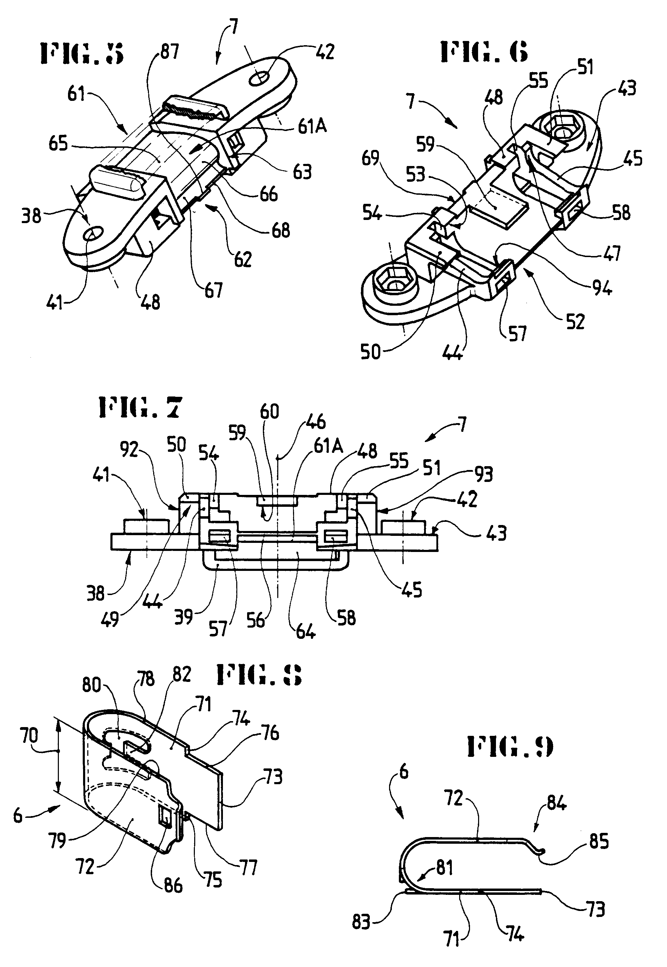

Quant à l'embase 7, illustrée dans les figures 5 à 7, 10 et 11, elle comporte une face inférieure 38 présentant, éventuellement, un bossage 39 destiné à s'insérer dans un logement prévu à cet effet dans le fond 40 de la cuvette 2 afin de garantir le positionnement, à l'intérieur de cette dernière, de cette embase 7. Celle-ci est, en fait, rendue solidaire de la carrosserie 3 du véhicule automobile au moyen d'organes de fixation, tel que vis et comporte, de ce fait, des orifices 41, 42 servant, précisément, de passage à ces organes de fixation.

Quant à la face supérieure 43, orientée en direction du portillon 4, de cette embase 7, elle présente, tout d'abord, deux rampes d'appui 44, 45 disposées symétriquement par rapport au plan médian vertical 46 de ladite embase 7, sur ces rampes d'appui 44, 45 venant à évoluer les cames 11, 12 correspondant au portillon 4, tel que ceci apparaîtra plus en avant dans la description.

Par ailleurs, lesdites rampes d'appui 44, 45 aboutent, à leur extrémité avant 47 à une paroi transversale 48 disposée perpendiculairement au plan de ladite embase 7.

Cette paroi transversale 48 présente, au niveau de son bord supérieur 49 et au-delà des rampes d'appui 44, 45, c'est-à-dire dans une direction consistant à s'éloigner du plan médian vertical 46, des retours 50, 51 orientés en direction de la partie arrière 52 de l'embase 7 et disposés parallèlement à cette dernière. Ces retours 50, 51 sont destinés à s'enrouler en phase finale d'ouverture du portillon 4, autour des tourillons 16, 17 équipant ce dernier. Ainsi les retours 50, 51 viennent à compléter les moyens de retenue du portillon 4 sur l'embase 7 lorsque la trappe 1 est en position ouverte, moyens que constituent lesdits tourillons 16, 17.

Cette paroi transversale 48 présente, en outre et sur sa face arrière 53, des encoches 54, 55 se situant de manière adjacente aux rampes d'appui 44, 45 et sur le côté de ces dernières orienté en direction du plan médian vertical 46. En fait, dans ces encoches 54, 55 viennent à s'insérer les oreilles 20, 21 équipant les cames 11, 12 du portillon 4 en vue d'assurer le guidage de ce dernier par rapport à ladite embase 7 au cours de sa rotation sur cette dernière.

A noter qu'au droit de ces encoches 54, 55 mais disposés en bordure arrière 56 de l'embase 7, sont aménagés des encadrements 57, 58 dans lesquels s'insèrent les languettes 23, 24 équipant, à leur partie arrière 22, les oreilles 20, 21 ceci lorsque le portillon 4 vient à être refermé. Ces encadrements 57, 58 constituent, en combinaison avec lesdites languettes 23, 24, les moyens de retenue du portillon 4 contre d'éventuels agissements qui lui seraient imprimés dans une direction verticale, une fois refermé sur la cuvette 2.

Un autre retour 59 équipe, par ailleurs, la face arrière 53 et en bordure supérieure 49 de la paroi transversale 48. Ce retour 59 s'étend, également, parallèlement et en direction de la partie arrière 52 de l'embase 7. Toutefois, il vient à se situer dans le plan médian horizontal de cette dernière. La face inférieure 60 de ce retour 59 a pour but de coopérer avec le butoir 37 surmontant les glissières 27, 28 lorsque le portillon 4 est en position ouverte. Ainsi, la coopération de ce butoir 37 et du retour 59 permet, d'une part, de limiter l'angle d'ouverture du portillon 4 par rapport à l'embase 7 et, d'autre part, contrecarrer les actions susceptibles d'être exercées sur ce portillon 4 en vue de repousser celui-ci au-delà de sa position d'ouverture maximum, actions qui finalement pourraient avoir pour conséquence, l'arrachement de la trappe d'obturation 1.

De plus, l'on remarquera la présence, sur cette embase 7, de moyens d'action 61 destinés à coopérer avec une extrémité active de l'autre partie non rendue solidaire du portillon 4, des moyens élastiques 6.

En fait, ces moyens d'action 61 se présentent sous forme d'une came 61A dont le profil s'étend, au niveau de la face inférieure 38 de l'embase 7, depuis la partie arrière 52 de cette dernière jusqu'à sa partie avant 62, tout en remontant le long de la face avant 63 de la paroi transversale 48. Il convient de préciser, à ce propos, qu'un espace 64 persiste entre le bossage 39 et la face inférieure 38 de l'embase 7, ceci plus précisément, de sorte que les moyens élastiques 6 soient en mesure de coopérer avec ces moyens d'action 61 que constitue la came 61A.

De plus, on remarquera que les courbures 65, 66, 67 empruntées par ce profil de came, sont déterminées de telle sorte que lesdits moyens élastiques 6 viennent exercer une force de rappel sur le portillon 4, force dont le module et le sens viennent à varier au cours de la rotation dudit portillon 4.

Ainsi, au travers de ce profil de came, les moyens élastiques 6 auront pour fonction, d'une part, de maintenir le portillon 4 refermé sur la cuvette 2 ou au contraire, d'assurer son blocage en position ouverte.

Ainsi, la première courbure 65, s'étendant depuis la partie arrière 52 de l'embase 7 jusqu'à sa partie avant 62, est déterminée de sorte que l'action des moyens élastiques 6 vienne à garantir le rappel du portillon 4 en position de fermeture. Par contre et au-delà de cette première courbure 65, le profil de la came 61A comporte une seconde courbure 66 remontant le long de la face avant 63 de la paroi transversale 48. Au niveau de cette seconde courbure 66, les moyens élastiques 6 rencontrent un point dur au-delà duquel leur action sur le portillon 4 vient à se modifier puisque ce dernier est, alors, rappelé en position d'ouverture.

Puis l'on distingue une troisième courbure 67, se situant en bout de ce profil de came 61A et qui, contrairement aux courbures 65, 66 précédentes est de forme concave et délimitée, finalement, par un rebord 68 se situant en bordure supérieure 69 de la face avant 63 correspondant à ladite paroi transversale 48.

En fait et au travers de cette troisième courbure 67 du profil de came 61A, les moyens élastiques 6 viennent à garantir le blocage dudit portillon 4 en position ouverte notamment pendant l'approvisionnement en carburant du véhicule automobile.

Quant à ces moyens élastiques 6, illustrés dans les figures 8 à 11, ceux-ci sont constitués par une lame élastique d'une certaine hauteur 70 empruntant la forme approximative d'un "U" de manière à définir deux ailes parallèles 71, 72.

L'une de ces ailes parallèles 71 est rendue solidaire de la face interne 8 du portillon 4.

Plus précisément, l'extrémité libre 73 de cette aile 71 est engagée dans les rainures 29, 30 des glissières 27, 28 jusqu'à la hauteur d'épaulements 74, 75 définie au travers de décrochements 76, 77 pratiqués dans le chant supérieur 78 et inférieur 79 de cette aile 71.

Une découpe en forme de "U" 80 est, par ailleurs, pratiquée dans la partie avant 81 de cette aile 71, de manière à définir une lame 82 dont le chant avant 83 est en mesure de coopérer avec les moyens anti-recul 35 équipant la face interne 8 du portillon 4 pour, précisément, empêcher que les moyens élastiques 6 et, plus particulièrement, l'aile parallèle 71 ne viennent à se dégager de ces glissières 27, 28.

Tandis que l'autre aile parallèle 72 comporte une extrémité active 84 destinée à coopérer avec les moyens d'action 61 que constitue la came 61A.

En fait, cette extrémité active 84 est repliée en forme d'un "S" en direction de la première aile parallèle 71 de manière à définir un bossage inférieur 85 limitant le contact avec le profil de la came 61A à une génératrice.

Ainsi et partant de la position de fermeture de la trappe 1, pour atteindre la position d'ouverture par rotation du portillon 4, cette extrémité active 84 vient à coopérer avec la première courbure 65 du profil de la came 61A. Au cours de cette coopération, lesdits moyens élastiques 6 exercent, sans cesse, une force de rappel sur le portillon 4 en direction de fermeture. Puis, tout en insistant dans le sens d'ouverture dudit portillon 4, ladite extrémité active 84 évolue le long de la seconde courbure 66 du profil de ladite came 61A, progression au cours de laquelle l'action desdits moyens élastiques 6 vient à se modifier de manière à exercer une force de rappel sur ce portillon 4 dans sa direction d'ouverture.

Finalement, cette extrémité active 84 et, plus particulièrement le bossage inférieur 85 de sa structure en forme de "S", viennent à se loger dans la forme concave que définit la troisième courbure 67 du profil de cette came 61A. A noter, à ce propos, que le rebord 68 vient à servir de butée à cette extrémité active 84 des moyens élastiques 6 de sorte que ceux-ci ne s'échappent inopinément des moyens d'action 61 correspondant à l'embase 7. L'on remarquera, par ailleurs, qu'à l'approche de cette extrémité active 84 de l'aile parallèle 72 correspondant aux moyens élastiques 6, est aménagée une lumière 86 dans laquelle vient à s'insérer un ergot 87 équipant le chant avant 88 dudit rebord 68, configuration qui ne constitue qu'une sécurité additionnelle à l'éventualité exposée au préalable, à savoir, l'échappement de l'extrémité active 84, correspondant à ces moyens élastiques 6, des moyens d'action 61 de l'embase 7.

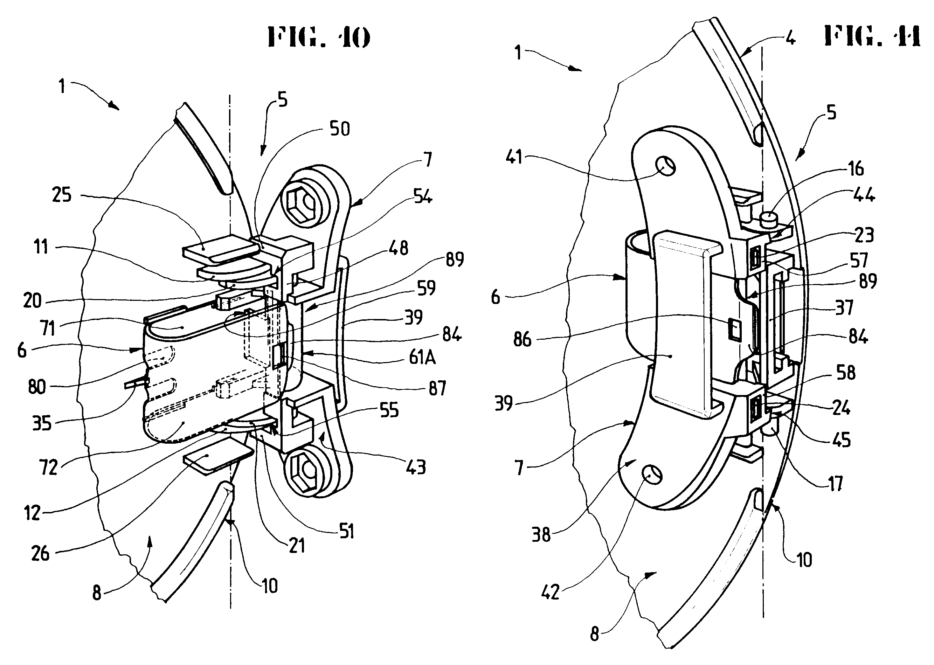

Les figures 10 et 11 illustrent plus particulièrement le fonctionnement de la trappe d'obturation 1 conforme à l'invention.

On y observe, à ce propos, la coopération des cames 11, 12, correspondant au portillon 4, avec les rampes d'appui 44, 45 équipant l'embase 7 et qui, en combinaison avec les agissements des moyens élastiques 6 sur les moyens d'action 61 de cette embase 7 constituent, avantageusement, des moyens 89 pour décaler à la fois dans le plan 90 de la carrosserie 3 et suivant une direction perpendiculaire 90A à cette dernière de manière à s'en écarter, l'axe de rotation du portillon 4 lors de l'ouverture de ce dernier. En quelque sorte, ce portillon 4 peut, au travers de ces moyens de décalage 89, équipant les moyens d'articulation 5 que constitue la combinaison dudit portillon 4, de l'embase 7 et des moyens élastiques 6 comporter n'importe quelle forme et, notamment, il peut être rond sans que son extrémité arrière 91, se situant, sans cesse au-delà dudit axe de rotation ne vienne à gêner l'ouverture du portillon 4 en prenant appui, soit sur la carrosserie 3 ou encore sur le fond de la cuvette 2.

On notera, en outre, que tant au travers des moyens de retenue que constitue la coopération des tourillons 16, 17, équipant le portillon 4, avec les retours 50, 51 de la paroi transversale 48 correspondant à l'embase 7, ainsi qu'aux moyens de retenue que forment les languettes 23, 24 destinées à s'insérer dans les encadrements 57, 58 et, plus particulièrement, les moyens de guidage formés, d'une part, par la coopération des oreilles 20, 21 avec les encoches 54, 55 de ladite paroi transversale 48 et, d'autre part, par les rebords 25, 26 en combinaison avec les chants supérieur 92 et inférieur 93, toujours, de cette paroi transversale 48, on préserve la tenue mécanique de la trappe d'obturation 1 de toute action qui lui serait imprimée lorsque le portillon 4 est, respectivement, en position d'ouverture, en position de fermeture ou, encore, dans une disposition intermédiaire.

Il convient d'observer, en outre, qu'en dehors des sécurités existantes pour éviter que les moyens élastiques 6 et notamment leur extrémité active 84 ne vienne à quitter les moyens d'action 61 de l'embase 7, les moyens de retenue formés par le retour 59 équipant la face arrière 53 de la paroi transversale 48 et le butoir 37, jouent un rôle tout particulier sur le plan de cette tenue mécanique de la trappe d'obturation 1 lorsque l'on tente à conférer au portillon 4 une rotation complémentaire alors que celui-ci a atteint sa position d'ouverture maximum.

On remarquera également, qu'en ce qui concerne le profil des cames 11, 12, et celui des rampes d'appui 44, 45, ils sont choisis de manière à obtenir l'amplitude du décalage désiré en ce qui concerne l'axe de rotation du portillon 4, ceci dans le plan 90 de la carrosserie 3 ainsi que dans la direction 90A qui lui est perpendiculaire et de manière à s'en écarter.

Toutefois, il peut être avantageux que les rampes 44, 45 présentent au niveau de leurs extrémités avant 47 et arrière 94 un profil correspondant, précisément, à celui des cames 11, 12 de sorte que, lorsque celles-ci viennent à atteindre, ces extrémités 47, 94 des rampes d'appui 44, 45, l'on obtienne un effet de butée limitant, en dehors des actions assurées par les différents moyens de retenue précités, ce décalage de l'axe de rotation dudit portillon 4 sur l'embase 7.

En conclusion, la présente invention est particulièrement intéressante en ce qu'elle conduit à une trappe d'obturation 1 constituée, en tout et pour tout, de trois pièces, à savoir un portillon, des moyens élastiques et une embase tout en autorisant, au travers de la coopération de ces trois pièces, le décalage dudit portillon par rapport à la carrosserie du véhicule automobile dans une double direction, à savoir, parallèlement au plan de cette carrosserie et perpendiculairement à cette dernière de sorte que, finalement, ce portillon peut être de forme quelconque et notamment, ronde sans que l'on rencontre de problème au fonctionnement, tel que ceci fut notamment le cas pour les trappes connues dans l'état antérieur de la technique.

## Revendications

1. Trappe d'obturation de l'accès au bouchon du réservoir de carburant d'un véhicule automobile, comportant un portillon (4) relié, d'une part, au travers de moyens d'articulation (5) et, d'autre part, par l'intermédiaire de moyens élastiques (6) susceptibles de maintenir ledit portillon (4), soit en position de fermeture de la trappe (1), soit en position d'ouverture de cette dernière, à une embase (7) solidaire de la carrosserie (3) dudit véhicule automobile, caractérisé par le fait que, d'une part, lesdits moyens élastiques (6) sont formés par une lame élastique présentant la configuration d'un "U" dont l'une des ailes parallèles (71) est rendue solidaire de la face interne (8) du portillon (4) et dont l'autre aile parallèle (72) présente une extrémité active (84) coopérant avec des moyens d'action (61) munissant ladite embase (7), et que, d'autre part, lesdits moyens d'articulation (5) comportent des moyens (89) pour décaler, à la fois, dans le plan (90) de la carrosserie (3) du véhicule automobile et suivant une direction (90A) perpendiculaire a cette carrosserie (3) et de manière à s'en écarter, l'axe de rotation du portillon (4) lors de l'ouverture de ce dernier, ces moyens (89) étant constitués par la combinaison desdits moyens élastiques (6) agissant sur les moyens d'action (61) de ladite embase (7) et par la coopération d'une paire de cames (11, 12) associées au portillon (4) et une paire de rampes d'appui (44, 45) solidaires de cette embase (7).

2. Trappe d'obturation selon la revendication 1, caractérisée par le fait que le profil des cames (11, 12), associées au portillon (4), et celui des rampes d'appui (44, 45) solidaires de l'embase (7), sont déterminés de manière à obtenir l'amplitude du décalage désiré de l'axe de rotation du portillon (4), ceci dans le plan (90) de la carrosserie (3), ainsi que dans la direction (90A) qui lui est perpendiculaire de manière à s'en écarter.

3. Trappe d'obturation selon les revendications 1 et 2, caractérisée par le fait que les rampes d'appui (44, 45) présentent, au niveau de leurs extrémités avant (47) et arrière (94), un profil correspondant, précisément, à celui des cames (11, 12) de manière à constituer des moyens butées susceptibles de limiter le décalage de l'axe de rotation dudit portillon (4) sur l'embase (7).

4. Trappe d'obturation selon l'une des revendications 1 a 3, caractérisée par le fait que les cames (11, 12) se situent au niveau de la face interne (8) du portillon (4) et sont disposées symétriquement par rapport au plan médian horizontal (9) de ce portillon (4), ces cames (11, 12) se situant, en outre, à proximité du bord périphérique (10) de ce dernier et se présentant sous forme d'ailes disposées perpendiculairement au plan dudit portillon (4) et dont le chant (13) vient à former le profil de came.

5. Trappe d'obturation selon la revendication 1, caractérisée par le fait qu'elle comporte des moyens de retenue du portillon (4) sur l'embase (7) lorsque la trappe d'obturation (1) est en position ouverte, ces moyens étant constitués par des tourillons (16, 17) disposés sur la face supérieure (14) et sur la face inférieure (15), respectivement, des cames (11, 12) ainsi que par des retours (50, 51) équipant le bord supérieur (49) d'une paroi transversale (48) à laquelle aboutent les extrémités avant (47) des rampes d'appui (44, 45) sur l'embase (7), ces retours (50, 51) venant à s'enrouler, en phase d'ouverture du portillon (4), autour desdits tourillons (16, 17).

6. Trappe d'obturation selon les revendications 1 et 5, caractérisée par le fait qu'elle comporte des moyens de guidage du portillon (4) par rapport à l'embase (7) en cours de rotation sur cette dernière, ces moyens de guidage étant constitués, d'une part, par des encoches (54, 55) pratiquées dans la face arrière (53) de la paroi transversale (48) et se situant de manière adjacente aux rampes d'appui (44, 45), sur le côté de ces dernières orientées en direction du plan médian vertical (46) de ladite embase (7) et, d'autre part, par des oreilles (20, 21) équipant la face inférieure (18) et la face supérieure (19), respectivement, des cames (11, 12) du portillon (4), ces oreilles (20, 21) s'insérant dans lesdites encoches (54, 55) pour assurer ce guidage du portillon (4).

7. Trappe d'obturation selon la revendication 6, caractérisée par le fait que les moyens de guidage du portillon (4) sur l'embase (7) sont complétés par des rebords (25, 26) disposés sur la face interne (8) du portillon (4), parallèlement au plan médian horizontal (9) de ce dernier, ces rebords (25, 26) venant à coopérer avec le chant supérieur (92) et le chant inférieur (93) de la paroi transversale (48) au moment de refermer ledit portillon (4).

8. Trappe d'obturation selon les revendications 1 et 6, caractérisée par le fait qu'elle comporte des moyens de retenue du portillon (4) contre d'éventuels agissements qui lui seraient imprimés dans une direction verticale, une fois ce portillon (4) refermé, ces moyens de retenue étant constitués par la combinaison de languettes (23, 24), équipant dans leur partie arrière (22), les oreilles (20, 21), avec des encadrements (57, 58) disposés au droit des encoches (54, 55) et en bordure arrière (56) de l'embase (7), dans ces encadrements (57, 58) venant, précisément, s'insérer les languettes (23, 24) lorsque le portillon (4) est en position de fermeture.

9. Trappe d'obturation selon la revendication 5, caractérisée par le fait que la paroi transversale (48) présente, au niveau de sa face arrière (53) et en bordure supérieure (49), un autre retour (59) s'étendant parallèlement et en direction de la partie arrière (52) de l'embase (7) et se situant dans le plan médian vertical (46) de cette dernière, ce retour (59) venant à coopérer, en position d'ouverture du portillon (4), avec un butoir (37) aménagé au niveau de ce dernier, pour contrecarrer une action susceptible d'être exercée sur ce portillon (4) en vue de repousser celui-ci au-delà de sa position d'ouverture maximum.

10. Trappe d'obturation selon les revendications 1 et 5, caractérisée par le fait que les moyens d'action (61) se situant au niveau de l'embase (7) se présentent sous forme d'une came (61A) dont le profil s'étend, au niveau de la face inférieure (38) de cette embase (7), depuis la partie arrière (52) de cette dernière jusqu'à sa partie avant (62), tout en remontant le long de la face avant (63) correspondant à la paroi transversale (48), ce profil de la came (61A) présentant des courbures (65, 66, 67), déterminées de telle sorte que les moyens élastiques (6) viennent à exercer une force de rappel sur le portillon (4), force dont le module et le sens varient au cours de la rotation de ce portillon (4).

11. Trappe d'obturation selon la revendication 10, caractérisée par le fait que la première courbure (65), empruntée par le profil de la came (61A) et s'étendant depuis la partie arrière (52) de l'embase (7) jusqu'à sa partie avant (62), est déterminée de sorte que l'action des moyens élastiques (6) garantisse le rappel du portillon (4) en position de fermeture, la seconde courbure (66), prolongeant la première (65) tout en remontant le long de la face avant (63) correspondant à la paroi transversale (48), étant définie de sorte que les moyens élastiques (6) rencontrent un point dur au-delà duquel leur action sur le portillon (4) se modifie en vue de rappeler celui-ci en position d'ouverture, la troisième courbure (67), se situant en bout de ce profil de came (61A) et présentant une forme concave, permettant d'assurer le blocage du portillon (4) en position d'ouverture au travers des moyens élastiques (6), cette troisième courbure (67) étant, par ailleurs délimitée par un rebord (68) se situant en bordure supérieure (69) de ladite face avant (63) correspondant à la paroi transversale (48).

12. Trappe d'obturation selon les revendications 1, 10 et 11, caractérisée par le fait que l'extrémité active (84) correspondant à l'aile parallèle (72) des moyens élastiques (6) est repliée en forme d'un "S" en direction de la première aile parallèle (61) de manière à définir une bossage inférieur (85) venant à coopérer avec le profil de la came (61A).

## Claims

1. Inlet cover for the access-way to the fuel-tank cap of an automotive vehicle, comprising a hatch (4) connected, on the one hand, throug hinging means (5) and, on the other hand, through springy means (6) capable of maintaining said hatch (4) either in closed position of the cover (1) or in opened position of same to a base (7) integral with the body (3) of said automotive vehicle, characterized in that, on the one hand, said springy means (6) are formed by a springy blade having a U-shaped cofiguration one parallel wing (71) of which is made integral with the inner face (8) of the hatch (4) and the other parallel wing (72) of which has an active end (84) co-operating with actuating means (61) said base (7) is provided with and in that, on the other hand, said hinging means (5) include means (89) for offsetting, both in the plane (90) of the body (3) of the automobile vehicle and according to a direction (90A) perpendicular to this body (3) and so as to depart from same, the rotation axis of the hatch (4) when opening same, these means (89) being formed by the combination of said springy means (6) acting on the actuating means (61) of said base (7) and by the co-operation of a pair of cams (11, 12) associated with the hatch (4) and a pair of bearing ramps (44, 45) integral with this base (7).

2. Inlet cover according to claim 1, characterized in that the profile of the cams (11, 12) associated with the hatch (4) and that of the bearing ramps (44, 45), integral with the base (7) are determined so as to achieve the desired offset amplitude of the rotation axis of the hatch (4), this in the plane (90) of the body (3) as well as in the direction (90A) which is perpendicular to same, so as to depart from same.

3. Inlet cover according to claims 1 and 2, characterized in that the bearing ramps (44, 45) have at the level of their front (47) and rear ends (94) a profile corresponding in particular to that of the cams (11, 12), so as to form thrust means capable of limiting the offset of the rotation axis of said hatch (4) on the base (7).

4. Inlet cover according to one of claims 1 to 3, characterized in that the cams (11, 12) are located at the level of the inner face (8) of the hatch (4) and are arranged symmetrical to the horizontal median plane (9) of this hatch (4), these cams (11, 12) being situated, in addition, in the vicinity of the peripheral edge (10) of same and are in the shape of wings arranged perpendicular to the plane of said hatch (4) the edge (13) of which forms the cam profile.

5. Inlet cover according to claim 1, characterized in that it includes means for retaining the hatch (4) on the base (7) when the inlet cover (1) is in open position, these means being comprised of swivel pins (16, 17) arranged on the upper face (14) and on the lower face (15), respectively, of the cams (11, 12) as well as of bends (50, 51) the upper end (49) of a cross-wall (48) to which are joined edge to edge the front ends (47) of the bearing ramps (44, 45) on the base (7) are provided with, these bends (50, 51) rolling up, during the phase of opening of the hatch (4), about said swivel pins (16, 17).

6. Inlet cover according to claims 1 and 5, characterized in that it includes means for guiding the hatch (4) with respect to the base (7) during its rotation about this latter, these guiding means being comprised, on the one hand, of notches (54, 55) provided for in the rear face (53) of the cross-wall (48) and being located adjacent to the bearing ramps (44, 45), on the side of same oriented towards the vertical median plane (46) of said base (7) and, on the other hand, of lugs (20, 21) the lower face (18) and the upper face (19), respectively, of the cams (11,12) of the hatch (4) are provided with, these lugs (20, 21) engaging into said notches (54, 55) to ensure this guiding of the hatch (4).

7. Inlet cover according to claim 6, characterized in that the means for guiding the hatch (4) on the base (7) are completed by rims (25, 26) arranged on the inner face (8) of the hatch (4), parallel to the horizontal median plane (9) of same, these rims 25, 26 co-operating with the upper end (92) and the lower end (93) of the cross-wall (48) when closing said hatch (4).

8. Inlet cover according to claims 1 and 6, characterized in that it includes means for retaining the hatch (4) against eventual action which would be imparted to same in a vertical direction once this hatch (4) has been closed, these retaining means being formed of the combination of tongues (23, 24) which the lugs (20, 21) are provided with at their rear portion (22) with frames (67, 58) arranged in front of the notches (54, 55) and at the rear edge (56) of the base (7), into these frames (67, 58) engaging in particular the tongues (23, 24) when the hatch (4) is in closed position.

9. Inlet cover according to claim 5, characterized in that the cross-wall (48) has, at the level of its rear face (53) and at the upper edge (49), another bend (59) extending parallel and towards the rear portion (52) of the base (7) and situated in the vertical median plane (46) of this latter, this bend (59) co-operating in open position of the hatch (4) with a stop (37) provided for at the level of this latter to counteract an action liable of being exerted onto this hatch (4) with a view to push same back beyond its maximum open position.

10. Inlet cover according to claims 1 and 5, characterized in that the actuating means (61) situated at the level of the base (7) are in the shape of a cam (61A) the profile of which extends, at the level of the lower face (38) of this base (7), from the rear portion (52) of this latter to its front portion (62) while ascending alongside the front face (63) of the cross-wall (48), this profile of the cam (61A) having bends (65, 66, 67) determined so that the springy means (6) exert a restoring force onto the hatch (4), the modulus and the direction of which force vary during the rotation of this hatch (4).

11. Inlet cover according to claim 10, characterized in that the first bend (65) followed by the profile of the cam (61A) and extending from the rear portion (52) of the base (7) to its front portion (62) is so determined that the action of the springy means (6) guarantees the restoring of the hatch (4) in closed position, the second bend (66) extending the first one (65), while ascending alongside the front face (63) corresponding to the cross-wall (48) being defined so that the springy means (6) meet a hard point beyond which their action on the hatch (4) is charged with a view to restore same into opened position, the third bend (67) situated at the end of this cam profile (61A) and having a concave shape allowing to ensure the locking of the hatch (4) in open position through the springy means 6, this third bend (67) being furthermore limited by a rim (68) situated at the upper edge (69) of said front face (63) corresponding to the cross-wall (48).

12. Inlet cover according to claims 1, 10 and 11, characterized in that the active end (84) corresponding to the parallel wing (72) of the springy means (6) is folded back into a "S" towards the first parallel wing (61), so as to define a lower boss (85) co-operating with the cam profile (61A).

## Patentansprüche

1. Abdeckklappe für den Zugang zum Treibstoffbehälterverschluß eines Kraftfahrzeugs, umfassend ein Türchen (4), das, einerseits, über Gelenkmittel (5) und, andererseits, über elastische Mittel (6), die geeignet sind, das genannte Türchen (4) entweder in geschlossener Stellung der Klappe (1) oder in geöffneter Stellung derselben zu halten, mit einer fest mit der Karosserie (3) des genannten Kraftfahrzeugs verbundenen Basis (7) verbunden ist, dadurch gekennzeichnet, daß, einerseits, die genannten elastischen Mittel (6) aus einem elastischen Blättchen gebildet sind, das eine U-förmige Konfiguration aufweist, deren einer gleichlaufende Flügel (71) fest mit der Innenfläche (8) des Türchens (4) verbunden ist und deren andere gleichlaufende Flügel (72) ein aktives Ende (84) aufweist, das mit Betätigungsmitteln (61), mit denen die genannte Basis (7) versehen ist, zusammenwirkt, und, andererseits, die genannten Gelenkmittel (5) Mittel (89) umfassen, um die Drehachse des Türchens (4) beim Öffnen desslben sowohl in der Ebene (90) der Karosserie (3) des Kraftfahrzeugs als auch in einer zu dieser Karosserie (3) senkrechten Richtung (90A), sodaß sie sich davon entfernt, zu versetzen, wobei diese Mittel (89) aus der Kombination der genannten, die Betätigungsmittel (61) der genannten Basis (7) betätigenden elastischen Mittel (6) und der Zusammenwirkung zwischen einem dem Türchen (4) zugeordneten Nockenpaar (11, 12) und einem Paar fest mit dieser Basis (7) verbundener Stützrampen (44, 45) bestehen.

2. Abdeckklappe nach Anspruch 1, dadurch gekennzeichnet, daß das Profil der dem Türchen (4) zugeordneten Nocken (11,12) und dasjenige der fest mit der Basis (7) verbundenen Stützrampen (44, 45) so bestimmt sind, daß die gewünschte Versetzungsgröße für die Drehachse des Türchens (4) erreicht wird und zwar in der Ebene (90) der Karosserie (3) sowie in einer zu dieser letzten senkrechten Richtung (90A), um sich davon zu entfernen.

3. Abdeckklappe nach Ansprüchen 1 und 2, dadurch gekennzeichnet, daß die Stützrampen (44, 45) im Bereich deren Vorder- (47) und Hinterenden (94) ein Profil aufweisen, das gerade demjenigen der Nocken (11, 12) entspricht, sodaß Anschlagmittel gebildet werden, die geeignet sind, die Versetzung der Drehachse des genannten Türchens (4) auf der Basis (7) zu beschränken.

4. Abdeckklappe nach einem der Ansprüche 1 bis 3, dadurch gekennzeichnet, daß sich die Nocken (11, 12) im Bereich der Innenfläche (8) des Türchens (4) befinden und symmetrisch zur waagerechten Mittelebene (9) dieses Türchens (4) angeordnet sind, wobei sich diese Nocken (11, 12) außerdem in der Nähe des Umkreisrandes (10) dieses letzten befinden und als senkrecht zur Ebene des genannten Türchens (4) angeordnete Flügel ausgestaltet sind, deren Rand (13) das Nockenprofil bildet.

5. Abdeckklappe nach Anspruch 1, dadurch gekennzeichnet, daß sie Mittel zum Festhalten des Türchens (4) an der Basis (7), wenn die Klappe in geöffneter Stellung ist, umfaßt, wobei diese Mittel aus an der Oberfläche (14) bzw. an der Unterfläche (15) der Nocken (11, 12) angeordneten Drehzapfen (16, 17) sowie aus Winkeln (50, 51), mit denen der obere Rand (49) einer Querwand (48) vorgesehen ist, an die die vorderen Enden (47) der Stützrampen (44, 45) auf der Base (7) anschließen, bestehen, wobei sich diese Winkel (50, 51) in der Öffnungsphase des Türchens (4) um die genannten Drehzapfen (16, 17) herumschlingen.

6. Abdeckklappe nach Ansprüchen 1 und 5, dadurch gekennzeichnet, daß sie Mittel zum Führen des Türchens (4) bezüglich der Base (7) während der Drehung auf dieser letzten umfaßt, wobei diese Führungsmittel aus, einerseits, in der Hinterfläche (53) der Querwand (48) vorgesehenen Einkerbungen (54, 55), die sich neben den Stützrampen 44, 45 an der der senkrechten Mittelebene (46) der genannten Base (7) zugewandten Seite dieser letzten befinden, und, andererseits, aus Henkeln (20, 21), mit denen die untere Fläche (18) bzw. die obere Fläche (19) der Nocken (11, 12) des Türchens (4) versehen ist, bestehen, wobei diese Henkel (20, 21) in die genannten Einkerbungen (54, 55) hineinführen, um diese Führung des Türchens (4) zu sichern.

7. Abdeckklappe nach Anspruch 6, dadurch gekennzeichnet, daß die Mittel zum Führen des Türchens (4) auf der Base (7) von auf der Innenfläche (8) des Türchens (4), parallel zur waagerechten Mittelebene (9) dieses letzten angeordneten Randleisten (25, 26) ergänzt sind, wobei diese Randleisten (25, 26) beim Schließen des genannten Türchens (4) mit dem oberen Rand (92) und dem unteren Rand (93) der Querwand (48) zusammenwirken.

8. Abdeckklappe nach Ansprüchen 1 und 6, dadurch gekennzeichnet, daß sie Mittel umfaßt, um das Türchen (4) gegen eventuelle Wirkungen festzuhalten, welche senkrecht auf dieses letzten ausgeübt werden könnten, nachdem dieses Türchen (4) geschlossen wurde, wobei diese Haltmittel aus der Kombination von Laschen (23, 24), mit denen die Henkel (20, 21) an deren hinteren Teil (22) versehen sind, und auf Höhe der Einkerbungen (54, 55) und am Hinterrand (56) der Basis (7) angeordneten Rahmen (57, 58) bestehen, wobei die Laschen (23, 24) gerade in diese Rahmen (57, 58) hineinführen, wenn sich das Türchen (4) in geschlossener Stellung befindet.

9. Abdeckklappe nach Anspruch 5, dadurch gekennzeichnet, daß die Querwand (48) im Bereich deren Hinterfläche (53) und am oberen Rand (49) einen weiteren Winkel (59) aufweist, der sich parallel und in Richtung des hinteren Teils (52) der Basis (7) erstreckt und sich in der senkrechten Mittelebene (46) dieser letzten befindet, wobei dieser Winkel (59) in geöffneter Stellung des Türchens (4) mit einem im Bereich dieses letzten vorgesehenen Anschlag (37) zusammenwirkt, um eine Wirkung, die auf dieses Türchen (4) ausgeübt werden könnte, um dieses über dessen äußerst geöffnete Stellung hinaus zu drücken, entgegenzuwirken.

10. Abdeckklappe nach Ansprüchen 1 und 5, dadurch gekennzeichnet, daß die im Bereich der Basis (7) befindlichen Betätigungsmittel (61) als ein Nocken (61A) ausgestaltet sind, dessen Profil sich im Bereich der unteren Fläche (38) dieser Basis (7), vom hinteren Teil (52) dieser letzten bis zu deren vorderen Teil (62) erstreckt, wobei es die Vorderfläche (63) der Querwand (48) entlang steigt, wobei dieses Nockenprofil (61A) Winkel (65, 66, 67) aufweist, die so bestimmt sind, daß die elastischen Mittel (6) eine Rückstellkraft auf das Türchen (4) ausüben, deren Modul und Richtung sich im Laufe der Drehung dieses Türchens (4) ändern.

11. Abdeckklappe nach Anspruch 10, dadurch gekennzeichnet, daß der erste von Nockenprofil (61A) angenommene Winkel (65), der sich vom hinteren Teil (52) der Basis (7) bis zu deren vorderen Teil (62) erstreckt, so bestimmt ist, daß die Wirkung der elastischen Mittel (6) die Rückstellung des Türchens (4) in geschlossene Stellung gewährleistet, wobei der zweite Winkel (66), der den ersten (65) verlängert, während er die Vorderfläche (63) der Querwand (48) entlang steigt, so bestimmt ist, daß die elastischem Mittel (6) an einen harten Punkt stoßen, jenseits dessen sich deren Wirkung auf das Türchen (4) ändert, damit dieses letzte in geöffnete Stellung zurückgestellt wird, und wobei sich der dritte Winkel (67) am Ende dieses Nockenprofils (61A) befindet und eine hohlgewölbte Gestalt aufweist, die es erlaubt, über die elastischen Mittel (6) das Festsetzen des Türchens (4) in geöffneter Stellung zu sichern, wobei dieser dritte Winkel (67) außerdem von einer am oberen Rand (69) der genannten Vorderfläche (63) der Querwand (48) befindlichen Randleiste (68) begrenzt ist.

12. Abdeckklappe nach Ansprüchen 1, 10 und 11, dadurch gekennzeichnet, daß das aktive Ende (84) des gleichlaufenden Flügels (72) der elastischen Mittel (6) in Richtung des ersten gleichlaufenden Flügels (61) "S"-förmig gefaltet ist, sodaß ein unterer Buckel (85) definiert wird, der mit dem Nockenprofil (61A) zusammenwirkt.
